Europäisches Patentamt

European Patent Office

Office européen des brevets

(19)

(11) Publication number:

**0 089 800**

**A1**

(12)

# EUROPEAN PATENT APPLICATION

(21) Application number: **83301428.5**

(22) Date of filing: **15.03.83**

(51) Int. Cl.³: **A 23 L 1/216**

(30) Priority: **19.03.82 GB 8208062**

(43) Date of publication of application:
**28.09.83 Bulletin 83/39**

(84) Designated Contracting States:
**BE DE FR GB NL**

(71) Applicant: **UNITED BISCUITS (UK) LIMITED**
**12 Hope Street**
**Edinburgh Scotland(GB)**

(72) Inventor: **Joshi, Ashok Pandurang**
**Woodside**
**Ashby-de-la-Zouch Leicestershire(GB)**

(74) Representative: **Oliver, Roy Edward et al,**
**POLLAK,MERCER & TENCH High Holborn House 52-54**
**High Holborn**
**London WC1V 6RY(GB)**

(54) **Quick-cooking potato.**

(57) A quick-cooking potato product is made by steaming potato pieces, the moisture content of which is thus increased, and these are then puffed by a fluidized bed technique, which dries and expands the pieces, typically to a moisture content below that of the original pieces.

EP 0 089 800 A1

Croydon Printing Company Ltd.

- 1 -

QUICK-COOKING POTATO PRODUCT

DESCRIPTION

This invention relates to potato products of the kind which can be quickly cooked and thus prepared for consumption, not only in a very short time but also preferably in a very simple and convenient way. The invention provides both a process for making a quick-cooking potato product and also the improved product resulting from this process.

Quick-cooking vegetable, grain and other food products are known and are commonly used in the manufacture of foodstuffs. Products of this kind based upon rice and pasta-like noodles are widely available, for instance. The preparation or so-called quick cooking of these products often amounts to little more than the addition to the product, usually while still in the container in which it is sold, of a predetermined quantity of hot liquid, such as meat or vegetable stock or boiling water, followed by thorough stirring to ensure substantially complete heating and rehydration of the product by the water or other liquid. Individual portions of pot-contained savoury snack-type meals are widely made and sold for preparation for immediate consumption in this way, for instance.

It would be very advantageous if quick-cooking products of this kind, which are often referred to as "instant", included dehydrated potato dice or pieces, as such products would be particularly suitable for use in dry soup mixes and dehydrated "instant" convenience foods packaged in containers. The term "dice" as used in relation to dried vegetables is not limited to vegetable pieces having length, width and thickness dimensions which are the same or at least approximately the same, i.e. cubes, but refers more generally to pieces having dimensions which can vary considerably, obtained by cutting vegetables along three different directions which are usually at right-angles or approximately so. The term "dice" is thus much looser in meaning in this context, compared with its usual meaning, and has this wider meaning herein.

Dehydrated potato dice have been commercially available for many years, but these known products have very poor rehydration properties. In order to prepare these known products so that they are ready for consumption, they need to be simmered in water for 20 to 30 minutes, in order to absorb sufficient water to reconstitute fully. Thus, these known products are not suitable for use as or in so-called instant convenience foods, which in practice are based upon rice, noodle and other products which can be made in forms allowing for rehydration in much shorter time, for instance up to about 5 to 6 minutes.

It has now been discovered that quick-cooking dehydrated potato products can be made, in piece or dice form, which rehydrate and so can be reconstituted in a much shorter time than known potato-based products of this kind.

According to this invention, a method of manufacture of a quick-cooking potato product is provided, so as to form a product of reduced moisture content which can be rehydrated for use, characterized in that (a) potato pieces are exposed to a steam-containing atmosphere, whereby their moisture content is increased, and (b) the resultant steam-treated pieces are subjected to puffing in a fluidized bed at an elevated temperature, so as to form a rehydratable puffed product of reduced moisture content.

It is found that dehydrated puffed potato products made in this way can readily be rehydrated, for instance by the application of boiling water. This surprising ability to undergo rehydration means that the dried puffed products of this invention can be reconstituted, ready for consumption as hot potato dice or pieces, within the time needed for application of the boiling water and thorough stirring sufficient to ensure that complete rehydration of all the product has occurred. The products of this invention can fairly be described as "instant", therefore, as they typically can be reconstituted in this way in 3 to 6 minutes, for instance. The method of the invention produces a dehydrated potato base which for instance can be packaged in a container along with other dehydrated vegetables, texturized vegetable protein, thickeners, flavours and additional ingredients. Provided these additional ingredients have a rehydration time of the same order as that of the potato pieces, the whole product can be prepared for use by adding boiling water to the container and stirring the contents, when the product reconstitutes in a few minutes and no further cooking is required.

The method of the invention is advantageously carried out by effecting the steaming step (a) upon dried potato pieces having a moisture content in the range from 5% to 12%; this range of moisture contents, like all such amounts specified below, indicates the amount of moisture present by weight of the product. The moisture content undergoes two main changes as the method is carried out. As a result of the steaming step (a), the moisture content is raised, usually from an initial amount in the above range of 5% to 12% to an amount in the range from 12% to 15%, while in the heat treatment or puffing step (b) the moisture content is reduced to not more than 5%, typically. The steaming step (a) increases the moisture about 2 to 3 times and the puffing step (b) reduces it to less than the original figure prior to the steaming step (a).

Commercially-available dried potato dice made from any suitable potatoes, including such varieties as Russett Burbank, Wilja, Pentland Crowm, Record and Maris Piper, may be employed to make the products of the invention, though of course the potato dice or pieces for use in carrying out the invention can also be made in a preliminary stage of the method of the invention itself. One advantage of the invention is that although the starting material can be potatoes per se, which are first cleaned, diced and pre-dried, the process can thus make use of existing pre-dried diced potato products.

Suitable length and breadth dimensions for the potato dice or other pieces, in carrying out the method of the present invention, are in the range from 10 x 10 mm to 16 x 16 mm, preferably about 14 x 14 mm, with a piece thickness in the range from 0.6 to 2.9 mm and, preferably, about 1.5 mm. The potato dice preferably have a bulk density which is in the range from 207 to 268 g/l, most preferably being in the range from 225 to 236 grams/litre.

In carrying out the preparation of potato products in piece form using fresh potatoes, the potato pieces are made by cleaning, peeling and dicing fresh potatoes and subjecting the resultant potato dice to blanching in steam or boiling water and then to drying, if desired, prior to carrying out step (a). Thus, the method preferably employed in carrying out the invention is similar to existing commercial operation and involves washing and cleaning the fresh potatoes, to remove soil and dirt and to reduce the microbiological load. The washed potatoes are then peeled by any conventional method. The peeled potatoes are diced, using a standard commercial dicer, and advantageously have dimensions in the ranges indicated above.

If required, the potato dice may then be blanched in steam or boiling water. The blanching temperature and time most suitably used largely depend upon dice size, quantity and other factors. Blanching is carried out mainly in order to inactivate the enzymes including the peroxide enzymes, and also again to reduce the microbiological load. The blanch water may contain beneficial chemicals, if desired. Drying of the potato dice or pieces is then carried out, whether or not the material has undergone a blanching step, prior to carying out the steaming step (a). Any suitable commercially-available drying equipment may be used for this stage, as a result of which the moisture content of the potato material is reduced. Following the drying step, the moisture content of the potato pieces is preferably in the range from 5% to 12% and most preferably from 6% to 7%. An alternative form of the method of the invention uses commercially-available pre-dried potato dice or pieces which have already undergone cleaning, dicing and moisture reduction steps of the kinds just described.

The first main step in carrying out the method of the invention is to subject the pre-dried potato dice or other pieces to steam processing, by exposing the potato material to a steam-containing atmosphere. This steaming step is preferably carried out with a steam-containing atmosphere at a temperature in the range from 95° to 100°C. A further preferred feature of the invention is to carry out the steaming step (a) for a period in the range from 5 to 20 minutes and, preferably, from 13 to 15 minutes. The steaming step is preferably carried out continuously, by passing the material through a steamer unit, consisting essentially of a long tunnel having an open mesh or other conveyor passing through it as the floor of the tunnel, so as to carry the potato dice into and through the steam-containing atmosphere. Sparge pipes are mounted so as to inject steam centrally of the tunnel, excess steam being exhausted at either end of the steamer unit and preferably being carried away through baffled ducts. In operation, the steam-containing atmosphere is most preferably at the upper temperature in the above preferred range, namely 100°C. The potato dice, which most preferably have the dimensions indicated above and a bulk density in the range from 207 to 268 g/l, can be continuously fed on to the moving conveyor running through the steamer unit tunnel in a layer having a reasonably uniform depth, preferably in the range from 25 to 100 mm and most preferably of 60 to 70 mm. In general, it is found suitable for the steamer unit to be constructed of such dimensions and for the rate of movement of the conveyor to be such that the potato dice undergo steaming in the tunnel for a period in the above-mentioned range of 5 to 20 minutes, a time of 13 to 15 minutes being most preferable. When steaming has been effected, the moisture content is typically found to be in the range from 12% to 15%, namely approximately 2-3 times the preferred moisture content of the pre-dried potato dice before they undergo the steaming stage.

After the treatment with steam, the potato dice are then subjected to drying and puffing by being treated in a fluidized bed at an elevated temperature. Any commercially-available fluidized bed dryer using a current of hot air is generally suitable for carrying out the second main stage of the method of preparation of the product of the invention. Fluidizing essentially involves the continuous movement of a body of pieces of material and, where the purpose of fluidizing is to effect some form of heat-treatment, as in the method of the invention, the air or other gaseous fluidizing medium is hot. The puffing step (b) of the method can essentially be carried out in two ways, as the fluidized bed can be formed by a particulate material heated by the fluidizing gas, into which the steam-treated potato pieces are introduced, or the latter can themselves undergo fluidization, a layer of the potato pieces thus forming the fluidized bed itself. The hot air temperature used for puffing preferably is in the range from 200° to 300°C and most preferably from 240° to 270°C. A suitable heat-transfer material, for use when puffing a food product, and thus when carrying out the puffing step of the invention in a fluidized bed of particulate material is common salt. To cover the possibility that some particles may adhere to the puffed product it is advantageous if these are a food material which, moreover enhances the flavour of the product. It is desirable to carry out the drying and puffing step so that the potato pieces are subjected to a residence time in the fluidized bed in the range from 20 to 60 seconds, a residence time of 25 to 30 seconds being typical and preferable. It will naturally be understood that the optimum time required for the drying and puffing stage will depend to a certain extent upon the dice size, the original moisture content, the steaming time and thus the final moisture content and the input weight. The final moisture content of the steamed, dried and puffed potato dice is typically very low, namely up to 5% and is preferably from 2% to 4%.

In order that the invention may be more readily understood, examples of the process are given below in a non-limitative manner.

EXAMPLE 1

Commercially-available pre-dried potato dice, having an average size of 15 x 15 x 1.75 mm, a moisture content of 6% and a bulk density of 230 g/l, were subjected to steam processing at 100°C for a period of 8 minutes, by being passed through a tunnel-shaped steamer unit of the kind generally described above. The depth of the layer of potato dice passing through the steamer was approximately 60 mm. The resultant steamed product had a moisture content of 13%-14%.

In a second stage, the steamed potato dice so produced were dried and puffed by being passed into a fluidized bed drier having an air current temperature of 270°C, the residence time of the potato pieces in the fluidized bed being approximately 30 seconds. The final moisture content was in the range from 2% to 4%.

The quick-cooking potato product so produced was then subjected to a rehydration test. 350 g of boiling water was added to 25 g of the product in a container, the contents of the container were then stirred and the container was covered and allowed to stand for 2 minutes. The treated dehydrated potato pieces were then removed from the container and allowed to drain for 1 minute and were then weighed. The weight of the product was found to be 70g, so that the rehydration ratio, that is the ratio of the dry weight of the product to the rehydrated weight, was 1:2.8. Using a sample of this product, a dehydrated "instant" convenience food was made with other dehydrated reconstitutable materials, in a container. Boiling water was then added, the contents of the container were stirred and it was found that the produce reconstituted to a hot edible state in 6 minutes.

EXAMPLE 2

Commercially-available potato dice were used, having an average size of 14 x 14 x 1.5 mm, a moisture content of 7% and a bulk density of 200 g/l. These were subjected to steam processing at $100^{\circ}$C for 13 minutes in the apparatus described above and used in carrying out Example 1. The depth of the layer of dice in the steamer unite was again approximately 60 mm, but it will be seen that, in comparison with Example 1, the potato dice were smaller, with a higher moisture content and a lower bulk density and were subjected to steaming for a longer time.

After the steaming step, the product was dried and puffed in a fluidized bed drier operating at an air current temperature of $280^{\circ}$C and so was subjected to a residence time of 30 seconds.

The product of this example was then subjected to the same rehydration test described in Example 1 and the product was found to have a rehydration ratio of 1:3.2. Again a dehydrated "instant" convenience food was made in a container, boiling water was added and the contents were stirred. With this sample, the product was found to reconstitute to a satisfactory state ready for eating in 4 minutes.

EXAMPLES 3 and 4

The above Examples 1 and 2 illustrate the puffing step when carried out by introducing the steam-treated product into a fluidized bed of a particulate solid, which most preferably is common salt. The same steam-treated products were also subjected to an alternative form of the second stage, by undergoing fluidizing in a hot air current, without use of a bed of particulate material as such. When hot air or, in general, other hot fluidizing gas acts directly on the steam-treated potato pieces, it is desirable to ensure that scorching or other excessive effects do not arise. This can be achieved by using the fluidizing gas at a somewhat lower temperature, typically in the range of $240^{\circ}$ to $260^{\circ}C$, the former being very suitable in many cases. In this way, products were obtained having acceptable rehydration times similar to those of Examples 1 and 2.

CLAIMS:

1. A method of manufacture of a quick-cooking potato product, in which potato pieces are treated so as to form a product of reduced moisture content which can be rehydrated for use, characterized in that (a) potato pieces are exposed to a steam-containing atmosphere, whereby their moisture content is increased, and (b) the resultant steam-treated pieces are subjected to puffing in a fluidized bed at an elevated temperature, so as to form a rehydratable puffed potato product of reduced moisture content.

2. A method according to claim 1, in which the steaming step (a) is carried out upon dried potato pieces having a moisture content in the range from 5% to 12%.

3. A method according to claim 1 or 2, in which the steaming step (a) is carried out with a steam-containing atmosphere at a temperature in the range from $95^{\circ}$ to $100^{\circ}$C.

4. A method according to claim 1, 2 or 3, in which the steaming step (a) is carried out for a period in the range from 5 to 20 minutes and, preferably, from 13 to 15 minutes.

5. A method according to any preceding claim, in which the steam-treated pieces have a moisture content in the range from 12% to 15%.

6. A method according to any preceding claim, in which the steaming step is carried out continuously by passing dried potato pieces, having a bulk density in the range from 207 to 268 g/l, through the steam-containing atmosphere, in the form of a moving layer having a depth in the range from 25 to 100 mm.

7. A method according to claim 6, in which the moving layer of potato pieces has a depth of 60 to 70 mm.

8. A method according to claim 6 or 7, in which the potato pieces have length and breadth dimensions in the range from 10 x 10 mm to 16 x 16 mm and a thickness in the range from 0.6 to 2.9 mm.

9. A method according to any preceding claim, in which the potato pieces are made by cleaning, peeling and dicing fresh potatoes and subjecting the resultant potato dice to blanching in steam or boiling water and then to drying, prior to carrying out the steaming step (a).

10. A method according to any preceding claim, in which the puffing step (b) is carried out by treating the steam-treated potato pieces in a fluidized bed of a particulate solid.

11. A method according to claim 10, in which the particulate solid comprises common salt.

12. A method according to any of claims 1 to 9, in which the puffing step (b) is carried out by fluidizing a layer of the steam-treated potato pieces.

13. A method according to any of claims 10 to 12, in which the bed or layer is fluidized by means of air at a temperature in the range from $200^\circ$ to $300^\circ$C.

14. A method according to claim 13, in which the air temperature is in the range from $240^\circ$ to $270^\circ$C.

15. A method according to any of claims 10 to 14, in which the potato pieces are subjected to fluidizing for a period in the range from 20 to 60 seconds and, preferably, from 25 to 30 seconds.

16. A method according to any preceding claim, in which the puffed potato product has a moisture content up to 5% and, preferably, in the range from 2% to 4% and the product can typically be rehydrated, by contact with boiling water, in a time of 3 to 6 minutes.

17. A method according to claim 1, substantially as described with reference to any of the foregoing Examples.

18. A quick-cooking potato product, when made by a method according to any preceding claim.

19. A quick-cooking potato product, made by steam-treating and puffing potato pieces and capable of rehydration with boiling water in up to 6 minutes.

European Patent
Office

EUROPEAN SEARCH REPORT

0089800
Application number

EP  83 30 1428

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 705 679  (F.P. GRIFFITHS et al.)<br>* Claims 1-3 *<br><br>--- | | A 23 L    1/216 |
| A | US-A-3 484 252  (S.J. POPEIL)<br><br>* Abstract *<br><br>----- | | |

TECHNICAL FIELDS
SEARCHED (Int. Cl. ³)

A 23 L    1/00

The present search report has been drawn up for all claims

| Place of search<br>BERLIN | Date of completion of the search<br>24-05-1983 | Examiner<br>SCHULTZE  D |
|---|---|---|